# EUROPÄISCHE PATENTSCHRIFT

(11) **EP 2 463 330 B1**
(45) Veröffentlichungstag und Bekanntmachung des Hinweises auf die Patenterteilung: **10.09.2014**
(21) Anmeldenummer: 11190994.1
(22) Anmeldetag: 28.11.2011
(51) Int. Cl.: B29C 67/20, B29C 44/34, C08J 9/00, E04B 1/74, E04B 1/76, E04C 2/20, C08J 9/224, C08J 9/232

(54) **Wärmedämmplatte, Verfahren zur Herstellung einer Wärmedämmplatte**
Method for manufacturing a heat insulating board and heat insulating board
Plaque d'isolation thermique, procédé de fabrication d'une plaque d'isolation thermique

(30) Priorität: 07.12.2010 DE 102010053611
(43) Veröffentlichungstag der Anmeldung: 13.06.2012
(73) Patentinhaber: STO SE & Co. KGaA, 79780 Stühlingen (DE)
(72) Erfinder: Burgeth, Gerald, 79787 Lauchringen (DE); Hitzler, Martin, 78244 Gottmadingen (DE)
(74) Vertreter: Gottschalk, Matthias

(56) Entgegenhaltungen:
- EP-A2- 2 071 092
- WO-A1-2009/066813
- WO-A2-2009/037116

## Beschreibung

### Gebiet der Erfindung

Die Erfindung betrifft eine Wärmedämmplatte aus Polystyrolpartikelschaum mit den Merkmalen des Oberbegriffes des Anspruchs 1. Des Weiteren betrifft die Erfindung ein Verfahren zur Herstellung einer Wärmedämmplatte aus Polystyrolpartikelschaum sowie die Verwendung einer solchen Wärmedämmplatte als Putzträgerplatte in einem Wärmedämmverbundsystem.

### Stand der Technik

Aus dem Stand der Technik sind insbesondere Wärmedämmplatten aus Polystyrolpartikelschaum bekannt, die weiß sind. Man hat jedoch festgestellt, dass die Wärmedämmeigenschaften derartiger Platten durch Zugabe von Pigmenten, die eine dunkle Färbung bewirken, wie beispielsweise Ruß oder Graphit, verbessert werden kann. Dieser Effekt, der unter anderem in der Druckschrift EP 0 620 246 A1 beschrieben wird, soll darin begründet liegen, dass Pigmente wie Ruß oder Graphit die Strahlungsdurchlässigkeit der Wärmedämmplatte in Bezug auf die auftreffende Wärmestrahlung bzw. Infrarotstrahlung verringern. Da Materialien, welche für Wärmestrahlung undurchlässig sind, unter der Bezeichnung athermane Materialien zusammengefasst werden, sind auch die Pigmente Ruß und Graphit den athermanen Materialien zuzuordnen. In Abhängigkeit von Faktoren wie Farbe, Teilchengröße Teilchenform und Oberflächenbeschaffenheit der Teilchen sowie Verteilung der Teilchen in der Wärmedämmplatte weist das athermane Material in Bezug auf Infrarotstrahlung eine überwiegend absorbierende oder remittierende bzw. reflektierende Eigenschaft auf. Darüber hinaus hängt der Grad der Absorption und/oder der Remission von der Wellenlänge der auftreffenden Strahlung und dem jeweiligen Einfallswinkel ab. In der Regel bewirken jedoch dunkle, matte Materialien, wie beispielsweise Ruß, eine Absorption und helle, spiegelnde Materialien, wie beispielsweise Metallpulver, eine Remission bzw. Reflexion der Infrarotstrahlung.

Eine Verbesserung der Wärmedämmwirkung konnte im Stand der Technik insbesondere durch Zugabe dunkel färbender Pigmente, das heißt durch Zugabe athermaner Stoffe mit überwiegend absorbierenden Eigenschaften, bewirkt werden. Die dunkle Färbung erweist sich jedoch im Hinblick auf die Formstabilität der Platte bei Sonneneinstrahlung als nachteilig. Denn die Absorption der Wärmestrahlung hat zur Folge, dass sich die im Bereich von Gebäudefassaden verbauten Wärmedämmplatten stark verformen. Eine typische Erscheinung ist eine konkave Wölbung der Platten, auch Schüsseln genannt, welche dazu führt, dass sich die Stoßfugen auch nach Aufbringen einer abschließenden Putzschicht noch abzeichnen.

Es hat bereits viele Versuche gegeben, eine athermanes Material enthaltende Wärmedämmplatte dahingehend zu verbessern, dass eine unerwünschte Verformung bei Wärmeinstrahlung verhindert oder zumindest deutlich verringert wird, die vorteilhaften Effekte, wie beispielsweise die Verbesserung der Wärmedämmwirkung, jedoch erhalten bleiben.

Aus der WO 2004/065468 A1 geht beispielsweise ein dämmender geschäumter Werkstoff aus pigmententhaltenden und pigmentfreien Styrolpolymerisatpartikeln hervor, wobei die Verteilung der unterschiedlich farbigen Styrolpolymerisatpartikel bevorzugt unregelmäßig ist. Der Werkstoff weist somit eine gesprenkelte Erscheinung auf, wobei die pigmentfreien Styrolpolymerisatpartikel weiß und die pigmententhaltenden Styrolpolymerisatpartikel vorzugsweise dunkel erscheinen. Als nachteilig erweist sich jedoch, dass die enthaltenen pigmentfreien Styrolpolymerisatpartikel entsprechend ihrem Anteil im Werkstoff den Effekt einer verbesserten Wärmedämmwirkung, welcher durch die pigmententhaltenden Styrolpolymerisatpartikel hervorgerufen wird, zunichtemachen. Denn bei den pigmentfreien Styrolpolymerisatpartikeln handelt es sich um das Ausgangsmaterial zur Herstellung handelsüblicher weißer Polystyrolhartschaumplatten.

Die EP 2 017 075 A1 offenbart eine Dämmplatte aus expandiertem Polystyrol (EPS) mit einem Zusatz von athermanen Stoffen, welche ferner eine nach außen weisende Oberfläche mit einer die Wärmestrahlung zumindest teilweise reflektierenden Beschichtung aufweist. Die reflektierende Beschichtung soll eine hohe Formstabilität der ansonsten grauen Platte gewährleisten. Nachteil der Beschichtung ist jedoch der zusätzliche Herstellungsaufwand, so dass die Kosten steigen.

Der Erfindung liegt die Aufgabe zugrunde, eine Wärmedämmplatte aus einem ein athermanes Material enthaltenden Polystyrolpartikelschaum bereitzustellen, welche hervorragende Wärmedämmeigenschaften besitzt, zugleich jedoch bei Wärmeeinstrahlung ausreichend formstabil ist. Ferner soll die Wärmedämmplatte einfach und kostengünstig herstellbar sein.

Zur Lösung der Aufgabe wird eine Wärmdämmplatte mit den Merkmalen des Anspruchs 1 sowie ein Verfahren zur Herstellung einer solchen Wärmedämmplatte mit den Merkmalen des Anspruchs 6 vorgeschlagen. Eine bevorzugte Verwendung der Wärmedämmplatte geht aus Anspruch 10 hervor.

### Offenbarung der Erfindung

Die vorgeschlagene Wärmedämmplatte ist aus einem Polystyrolpartikelschaum hergestellt, welcher wenigstens ein athermanes Material enthält, das in Bezug auf Infrarotstrahlung überwiegend absorbierende oder überwiegend remittierende, insbesondere reflektierende Eigenschaften besitzt. Erfindungsgemäß enthält der Polystyrolpartikelschaum Polystyrolpartikel, welche jeweils mit wenigstens zwei unterschiedlichen athermanen Materialien dotiert sind, wobei ein erstes athermanes Material im Inneren eingebaut und ein zweites athermanes Material außen aufgebracht ist. Dadurch, dass ein Polystyrolpartikel im Kern ein anderes athermanes Material als außen auf der Oberfläche aufweist, kann das Polystyrolpartikel mit verschiedenen Eigenschaften belegt werden. Insbesondere kommen die jeweiligen Eigenschaften der unterschiedlichen athermanen Materialien gemeinsam in einem Polystyrolpartikel zum Tragen. Beispielsweise kann es sich bei den zwei unterschiedlichen athermanen Materialien um ein erstes athermanes Material mit überwiegend reflektierenden Eigenschaften und ein zweites athermanes Material mit überwiegend absorbierenden Eigenschaften in Bezug auf Infrarotstrahlung handeln. Hierzu können insbesondere Pigmente, welche sich im Hinblick auf ihren Farbton und/oder ihre Helligkeit unterscheiden, als athermanes Material eingesetzt werden. Weiterhin weist die Wärmedämmplatte wenigstens eine Schnittfläche auf, auf welcher sich das außen auf die Polystyrolpartikel aufgebrachte athermane Material als netzartiges Muster gegenüber den Schnittflächen der einzelnen Polystyrolpartikel visuell wahrnehmbar abzeichnet. Die netzartige Struktur entsteht aufgrund der im Wesentlichen runden Form der Polystyrolpartikel, die im verschweißten Zustand eine Art Haufwerk bilden. Durch das Verschweißen werden die Partikel zwar geringfügig verformt, die ursprüngliche Form der einzelnen Partikel bleibt jedoch erkennbar. Werden die Partikel nun angeschnitten, kommt das Kernmaterial zum Vorschein. Zugleich bewirkt der Schnitt durch die Beschichtung bzw. Umhüllung der Polystyrolpartikel, dass eine linienförmige Kontur um das Kernmaterial ausgebildet wird. Dort, wo sich die einzelnen Partikel nicht berühren, das heißt in den zwickelförmigen Lufträumen, scheint die Beschichtung bzw. die Umhüllung der dahinterliegenden Partikel durch. Da sich die beiden athermanen Materialen eines Polystyrolpartikels vorzugsweise im Hinblick auf den Farbton und die Helligkeit unterscheiden, ist das netzartige Muster auf der Schnittfläche der Wärmedämmplatte insbesondere aufgrund der Farb- und Helligkeitsunterschiede visuell wahrnehmbar.

Erfindunggemäß erscheint das netzartige Muster weniger hell als die Schnittflächen der einzelnen Polystyrolpartikel. Das heißt, dass die außen auf die Polystyrolpartikel aufgebrachte Beschichtung ein athermanes Material umfasst, das dunkler als das im Inneren enthaltene athermane Material ist. Die außen aufgebrachte dunkle Beschichtung der Polystyrolpartikel, welche sich auf der Schnittfläche der Wärmedämmplatte als netzartiges Muster abzeichnet, weist demnach überwiegend absorbierende Eigenschaften in Bezug auf Infrarotstrahlung auf Das auf der Schnittfläche zum Vorschein kommende helle Kernmaterial weist dagegen überwiegend remittierende bzw. reflektierende Eigenschaften in Bezug auf Infrarotstrahlung auf.

Vorteilhaftweise enthält der Polystyrolpartikelschaum Kohlenstoff, beispielsweise Ruß und/oder Graphit, Aluminiumpulver, ein sonstiges Metallpulver, Metalloxide, Nichtmetalloxide, organische Farbstoffe und/oder Farbstoffpigmente als athermanes Material. Es werden hieraus wenigstens zwei athermane Materialien gewählt, die sich im Hinblick auf ihre absorbierenden oder remittierenden bzw. reflektierenden Eigenschaften in Bezug auf Infrarotstrahlung unterscheiden. Grundsätzlich gilt, dass dunkle und/oder matte athermane Materialien, wie beispielsweise Ruß und Graphit, überwiegend absorbierende und helle und/oder glänzende athermane Materialien, wie beispielsweise Metallpulver und Metalloxide, überwiegend remittierende bzw. reflektierende Eigenschaften in Bezug auf Infrarotstrahlung besitzen. Vorteilhaft ist ferner, wenn das athermane Material mit überwiegend remittierenden bzw. reflektierenden Eigenschaften plättchenförmig ausgebildet ist, da diese Formgebung die remittierende bzw. reflektierende Eigenschaft unterstützt.

Bei der vorliegend relevanten Infrarotstrahlung, die es zu absorbieren und/oder zu remittieren bzw. zu reflektieren gilt, handelt es sich vorzugsweise um Infrarotstrahlung einer Wellenlänge zwischen 0,78 und 50µm. Das heißt, dass es insbesondere nahes und mittleres Infrarot, wobei das mittlere Infrarot der thermischen Strahlung entspricht, zu absorbieren und/oder zu remittieren bzw. zu reflektieren gilt. Durch die bewirkte Remission bzw. Reflexion der Infrarotstrahlung bleibt eine an einer Fassade angebrachte erfindungsgemäße Wärmedämmplatte auch bei längerer Sonneneinstrahlung formstabil. Insbesondere wird einem unerwünschten Schüsseln der Wärmedämmplatte entgegen gewirkt. Zugleich ist durch das im Kern und an der Oberfläche der Polystyrolpartikel enthaltene athermane Material eine gegenüber einer herkömmlichen weißen Polystyrolhartschaumplatte verbesserte Wärmedämmwirkung sichergestellt.

Der Polystyrolpartikelschaum kann im Kernmaterial und/oder in der Beschichtung des Kernmaterials weitere Additive und/oder Hilfsmittel, wie beispielsweise Flammschutzmittel, Nukleierungsmittel, Haftvermittler, insbesondere Bindemittel, UV-Stabilisatoren, Weichmacher, Antioxidantien und/oder Säurefänger enthalten. Da derartige Hilfsstoffe in der Regel für Wärmestrahlung undurchlässig sind, gehören sie ebenfalls den athermanen Materialien an. Eine genaue Abgrenzung zu den vorstehend bereits genannten athermanen Materialien ist daher kaum möglich.

Zur Lösung der eingangs genannten Aufgabe wird ferner ein Verfahren zur Herstellung einer erfindungsgemäßen Wärmedämmplatte vorgeschlagen. Dieses zeichnet sich dadurch aus, dass Polystyrolpartikel, in deren Innern bereits ein erstes athermanes Material eingebaut ist, mit einem zweiten athermanen Material beschichtet und dann vorgeschäumt werden. Anschließend werden die vorgeschäumten und mit einem zweiten athermanen Material beschichteten Polystyrolpartikel unter Druck- und/oder Wärmeeinwirkung zu einem Formkörper verschweißt. Der ausgehärtete Formkörper wird dann abschließend durch Schneiden aufgetrennt. Die Schnittebenen werden vorzugsweise derart gelegt, dass der Formkörper in mehrere Wärmedämmplatten aufgeschnitten wird. Eine mittels eines solchen Verfahrens hergestellte Wärmedämmplatte kann demnach mehr als eine Schnittfläche aufweisen, auf welcher sich aufgrund der innen und außen mit zwei unterschiedlichen athermanen Materialien dotierten Polystyrolpartikel ein netzartiges Muster abzeichnet.

In einer Abwandlung des erfindungsgemäßen Verfahrens werden die im Inneren mit einem ersten athermanen Material dotierten Polystyrolpartikel erst vorgeschäumt und dann mit einem zweiten athermanen Material beschichtet. Das heißt, dass die Beschichtung mit dem zweiten athermanen Material alternativ auch nach dem Vorschäumen erfolgen kann.

Als athermanes Material wird vorzugsweise Kohlenstoff, beispielsweise Ruß oder Graphit, Aluminiumpulver, ein sonstiges Metallpulver, Metalloxide, Nichtmetalloxide, organische Farbstoffe und/oder Farbstoffpigmente verwendet.

Es werden dunkle und/oder matte athermane Materialien, wie beispielsweise Ruß oder Graphit, zur äußeren Beschichtung der Polystyrolpartikel und helle und/oder glänzende athermane Materialen, wie beispielsweise Metallpulver oder Metalloxide, im Inneren der Polystyrolpartikel eingesetzt. Darüber hinaus können weitere Additive im Kernmaterial und/oder der Beschichtung enthalten sein. Beispielsweise können Hilfsmittel, wie Flammschutzmittel, Nukleierungsmittel, Haftvermittler, insbesondre Bindemittel, UV-Stabilisatoren, Weichmacher, Antioxidantien, Säurefänger und dergleichen, zugegeben werden.

Gemäß dem erfindungsgemäßen Verfahrens werden Polystyrolpartikel als Ausgangsmaterial verwendet, in deren Innern ein erstes athermanes Material mit überwiegend remittierenden, insbesondere reflektierenden Eigenschaften in Bezug auf Infrarotstrahlung eingebaut ist. Ferner wird zur Beschichtung der Polystyrolpartikel ein zweites athermanes Material verwendet, das überwiegend absorbierende Eigenschaften in Bezug auf Infrarotstrahlung besitzt. Über die jeweils zugegebene Menge an überwiegend absorbierenden und/oder überwiegend remittierenden bzw. reflektierenden athermanen Materialien können die Eigenschaften im Hinblick auf die Absorption und/oder Remission bzw. Reflexion von Infrarotstrahlung gesteuert werden.

Der anlagentechnische Aufwand zur Herstellung der erfindungsgemäßen Wärmedämmplatten entspricht dem Aufwand zur Herstellung herkömmlicher weißer Polystyrolpartikelschaumplatten. Es können ferner dieselben Anlagen ohne Umstellung eingesetzt werden. Denn der Herstellungsprozess unterscheidet sich im Wesentlichen lediglich im Hinblick auf das verwendete Ausgangsmaterial, da bereits mit einem athermanen Material dotierte Polystyrolpartikel Verwendung finden. Ferner im Hinblick auf den zusätzlichen Verfahrensschritt der Beschichtung der Polystyrolpartikel mit einem weiteren athermanen Material vor oder nach dem Vorschäumen.

Der Herstellungsprozess kann beispielsweise folgende Verfahrensschritte umfassen: Als Ausgangsmaterial werden Polystyrolpartikel verwendet, welche im Inneren mit Titandioxid (TiO₂) als einem ersten athermanen Material dotiert sind. Vorzugsweise wurde das Titandioxid zuvor gemeinsam mit einem Treibmittel und ggf. weiteren Additiven in das Styrol einpolymerisiert. Die im Inneren mit Titandioxid dotierten Polystyrolpartikel werden zunächst bei Temperaturen über 90° vorgeschäumt und anschließend mit einem weiteren athermanen Material beschichtet. Als weiteres athermanes Material wird ein solches verwendet, das im Unterschied zum Titandioxid im Inneren der Polystyrolpartikel in Bezug auf Infrarotstrahlung überwiegend absorbierende Eigenschaften besitzt. Die vorgeschäumten und beschichteten Polystyrolpartikel werden dann in eine Form gegeben und bei Temperaturen zwischen 100 und 120° zu einem Block verschweißt. Der ausgekühlte und ausgehärtete Block wird abschließend in mehrere Platten aufgeschnitten.

Darüber hinaus sind sowohl andere Zusammensetzungen als auch andere Verfahrensabläufe zur Herstellung einer erfindungsgemäßen Wärmedämmplatte geeignet. Weitere Ausführungsbeispiele werden nachfolgend genannt.

Aufgrund ihrer vorstehend beschriebenen vorteilhaften Eigenschaften ist eine erfindungsgemäße Wärmedämmplatte insbesondere zur Wärmedämmung von Gebäuden geeignet. Bevorzugt findet darüber hinaus eine erfindungsgemäße Wärmedämmplatte Einsatz in einem Wärmedämmverbundsystem, das eine ein- oder mehrlagige Wärmedämmschicht sowie eine hierauf aufgebrachte ein- oder mehrlagige Putzschicht umfasst. Bei Einsatz der Wärmedämmplatte in einem Wärmedämmverbundsystem ist insbesondere die Verwendung als Putzträgerplatte vorgesehen, da die Wärmedämmplatte auch bei längerer Sonneneinstrahlung ausreichend formstabil ist und nicht schüsselt. Somit bleibt bis zum Putzauftrag eine planebene Wärmedämmschicht erhalten. Ferner ist aufgrund der erhöhten Formstabilität der Wärmedämmplatte die Gefahr sich durch die Putzschicht abzeichnender Stoßfugen deutlich gemindert.

Bei der Verwendung der Wärmedämmplatte als Putzträgerplatte in einem Wärmedämmverbundsystem dient vorzugsweise die Schnittfläche der Wärmedämmplatte, auf welcher sich das außen auf die Polystyrolpartikel aufgebrachte athermane Material als netzartiges Muster abzeichnet, der Aufnahme der ein- oder mehrlagigen Putzschicht. Denn die Zweifarbigkeit der Schnittfläche bewirkt, dass ein Teil der auftreffenden Infrarotstrahlung absorbiert und ein weiterer Teil remittiert bzw. reflektiert wird, so dass die gewünschte Formstabilität gewährl ei stet ist.

### Ausführungsbeispiel 1

Einer Vorlage von 11 g vorgeschäumten Polystyrolpartikeln (Korngröße 2-4 mm, Schüttdichte 14,4 kg/m³ und mit 0,5 Gew.-% Titandioxid (TiO₂) dotiert) wurden 4,8 g einer Bindemittel-Wasser-Ruß-Lösung bestehend aus 3,6 g Acrylatbindemittel, 1,2 g Wasser und 0,5 g Ruß zugegeben. Die Polystyrolpartikel und die Lösung wurden homogen vermischt und die Mischung in eine Metallform der Abmessungen 12 cm x 12 cm x 7 cm eingegeben. Zur leichteren Entformbarkeit wurde die Form zuvor mit einer Antihaftfolie ausgekleidet. Die Form wurde geschlossen und der Inhalt der Form unter Einwirkung von Druck auf eine Plattenstärke von 3 cm verdichtet und zwei Stunden lang bei 90°C getrocknet.

Die Platte wurde entformt, durch Schneiden aufgetrennt und die Schnittfläche anschließend eine Stunde lang der direkten Sonneneinstrahlung ausgesetzt. Anhand einer Wärmebildaufnahme konnte eine Aufheizung der Platte auf 53,0°C festgestellt werden. Die Dichte der Patte beträgt 0,029 g/cm³ und die Wärmeleitfähigkeit 0,0306 W/mK.

### Ausführungsbeispiel 2

Einer Vorlage von 11 g vorgeschäumten Polystyrolpartikeln (Korngröße 2-4 mm, Schüttdichte 15,0 kg/m³ und mit 0,5 Gew.-% Gelbpigment dotiert) wurden 4,8 g einer Bindemittel-Wasser-Ruß-Lösung bestehend aus 3,6 g Acrylatbindemittel, 1,2 g Wasser und 0,5 g Ruß zugegeben. Die Polystyrolpartikel und die Lösung wurden homogen vermischt und die Mischung in eine Metallform der Abmessungen 12 cm x 12 cm x 7 cm eingegeben. Zur leichteren Entformbarkeit wurde die Form zuvor mit einer Antihaftfolie ausgekleidet. Die Form wurde geschlossen und der Inhalt der Form unter Einwirkung von Druck auf eine Plattenstärke von 3 cm verdichtet und zwei Stunden lang bei 90°C getrocknet.

Die Platte wurde entformt, durch Schneiden aufgetrennt und die Schnittfläche anschließend eine Stunde lang der direkten Sonneneinstrahlung ausgesetzt. Anhand einer Wärmebildaufnahme konnte eine Aufheizung der Platte auf 58,1°C festgestellt werden. Die Dichte der Patte beträgt 0,029 g/cm³ und die Wärmeleitfähigkeit 0,0305 W/mK.

### Referenzbeispiel 1 (graue EPS-Platte)

Einer Vorlage von 11 g vorgeschäumten Polystyrolpartikeln (Korngröße 4-8 mm, Schüttdichte 15,7 kg/m³ und mit Graphit dotiert) wurden 4,8 g einer Bindemittel-Wasser-Lösung bestehend aus 3,6 g Acrylatbindemittel und 1,2 g Wasser zugegeben. Die Polystyrolpartikel und die Lösung wurden homogen vermischt und die Mischung in eine Metallform der Abmessungen 12 cm x 12 cm x 7 cm eingegeben. Zur leichteren Entformbarkeit wurde die Form zuvor mit einer Antihaftfolie ausgekleidet. Die Form wurde geschlossen und der Inhalt der Form unter Einwirkung von Druck auf eine Plattenstärke von 3 cm verdichtet und zwei Stunden lang bei 90°C getrocknet.

Die Platte wurde entformt, durch Schneiden aufgetrennt und die Schnittfläche anschließend eine Stunde lang der direkten Sonneneinstrahlung ausgesetzt. Anhand einer Wärmebildaufnahme konnte eine Aufheizung der Platte auf 69,1°C festgestellt werden. Die Dichte der Patte beträgt 0,030 g/cm³ und die Wärmeleitfähigkeit 0,0301 W/mK.

### Referenzbeispiel 2 (weiße EPS-Platte)

Einer Vorlage von 11 g vorgeschäumten Polystyrolpartikeln (Korngröße 2-4 mm, Schüttdichte 14,4 kg/m³ und mit 0,5 Gew.-% Titandioxid (TiO₂) dotiert) wurden 4,8 g einer Bindemittel-Wasser-Lösung bestehend aus 3,6 g Acrylatbindemittel und 1,2 g Wasser zugegeben. Die Polystyrolpartikel und die Lösung wurden homogen vermischt und die Mischung in eine Metallform der Abmessungen 12 cm x 12 cm x 7 cm eingegeben. Zur leichteren Entformbarkeit wurde die Form zuvor mit einer Antihaftfolie ausgekleidet. Die Form wurde geschlossen und der Inhalt der Form unter Einwirkung von Druck auf eine Plattenstärke von 3 cm verdichtet und zwei Stunden lang bei 90°C getrocknet.

Die Platte wurde entformt, durch Schneiden aufgetrennt und die Schnittfläche anschließend eine Stunde lang der direkten Sonneneinstrahlung ausgesetzt. Anhand einer Wärmebildaufnahme konnte eine Aufheizung der Platte auf 18,8°C festgestellt werden. Die Dichte der Patte beträgt 0,029 g/cm³ und die Wärmeleitfähigkeit 0,0324 W/mK.

### Referenzbeispiel 3 (gelbe EPS-Platte)

Einer Vorlage von 11 g vorgeschäumten Polystyrolpartikeln (Korngröße 2-4 mm, Schüttdichte 14,4 kg/m³ und mit 0,5 Gew.-% Gelbpigment dotiert) wurden 4,8 g einer Bindemittel-Wasser-Lösung bestehend aus 3,6 g Acrylatbindemittel und 1,2 g Wasser zugegeben. Die Polystyrolpartikel und die Lösung wurden homogen vermischt und die Mischung in eine Metallform der Abmessungen 12 cm x 12 cm x 7 cm eingegeben. Zur leichteren Entformbarkeit wurde die Form zuvor mit einer Antihaftfolie ausgekleidet. Die Form wurde geschlossen und der Inhalt der Form unter Einwirkung von Druck auf eine Plattenstärke von 3 cm verdichtet und zwei Stunden lang bei 90°C getrocknet.

Die Platte wurde entformt, durch Schneiden aufgetrennt und die Schnittfläche anschließend eine Stunde lang der direkten Sonneneinstrahlung ausgesetzt. Anhand einer Wärmebildaufnahme konnte eine Aufheizung der Platte auf 26,8°C festgestellt werden. Die Dichte der Patte beträgt 0,029 g/cm³ und die Wärmeleitfähigkeit 0,0318 W/mK.

Nachfolgend sind die Werte der Übersicht halber noch einmal in einer Tabelle gegenübergestellt:

| | WLF [W/mK] | Dichte [g/cm³] | Aufheizung [°C] |
|---|---|---|---|
| Ausführungsbeispiel 1 | 0,0306 | 0,029 | 53,0 |
| Ausführungsbeispiel 2 | 0,0305 | 0,029 | 58,1 |
| Referenzbeispiel 1 (grau) | 0,0301 | 0,030 | 69,1 |
| Referenzbeispiel 2 (weiß) | 0,0324 | 0,029 | 18,8 |
| Referenzbeispiel 3 (gelb) | 0,0318 | 0,029 | 26,8 |

Die Übersicht zeigt deutlich, dass sich erfindungsgemäße Platten gegenüber einer herkömmlichen grauen EPS-Platte weniger stark aufheizen und demzufolge weniger zu thermisch bedingten, irreversiblen Formveränderungen neigen. Dabei bleibt die Wärmeleitfähigkeit weitgehend unverändert, so dass sehr gute Wärmedämmwerte, insbesondere im Vergleich mit einer weißen oder gelb eingefärbten EPS-Platte, erzielt werden. Letztere weisen lediglich den Vorteil einer noch geringeren Aufheizung auf.

## Patentansprüche

1. Wärmedämmplatte aus einem Polystyrolpartikelschaum, wobei der Polystyrolpartikelschaum wenigstens ein athermanes Material enthält, das in Bezug auf Infrarotstrahlung überwiegend absorbierende oder überwiegend remittierende, insbesondere reflektierende Eigenschaften besitzt, und wobei der Polystyrolpartikelschaum Polystyrolpartikel enthält, welche jeweils mit wenigstens zwei unterschiedlichen athermanen Materialien dotiert sind, wobei ein erstes athermanes Material im Inneren eingebaut und ein zweites athermanes Material außen aufgebracht ist,
**dadurch gekennzeichnet, dass** sich das außen auf die Polystyrolpartikel aufgebrachte athermane Material auf wenigstens einer Schnittfläche der Wärmedämmplatte als netzartiges Muster gegenüber den Schnittflächen der einzelnen Polystyrolpartikel visuell wahrnehmbar abzeichnet, wobei das netzartige Muster weniger hell als die Schnittflächen der einzelnen Polystyrolpartikel erscheint.

2. Wärmedämmplatte nach einem der vorhergehenden Ansprüche,
**dadurch gekennzeichnet, dass** der Polystyrolpartikelschaum Kohlenstoff, beispielsweise Ruß und/oder Graphit, Aluminiumpulver, ein sonstiges Metallpulver, Metalloxide, Nichtmetalloxide, organische Farbstoffe und/oder Farbstoffpigmente als athermanes Material enthält.

3. Wärmedämmplatte nach einem der vorhergehenden Ansprüche,
**dadurch gekennzeichnet, dass** der Polystyrolpartikelschaum im Kernmaterial und/oder in der Beschichtung des Kernmaterials weitere Additive und/oder Hilfsmittel, wie beispielsweise Flammschutzmittel, Nukleierungsmittel, Haftvermittler, insbesondere Bindemittel, UV-Stabilisatoren, Weichmacher, Antioxidantien und/oder Säurefänger enthält.

4. Verfahren zur Herstellung einer Wärmedämmplatte nach einem der vorhergehenden Ansprüche, bei dem Polystyrolpartikel, in deren Innern bereits ein erstes athermanes Material eingebaut ist, mit einem zweiten athermanen Material beschichtet und dann vorgeschäumt werden, wobei die Beschichtung mit einem zweiten athermanen Material auch nach dem Vorschäumen erfolgen kann, bei dem ferner die vorgeschäumten und mit einem zweiten athermanen Material beschichteten Polystyrolpartikel unter Druck- und/oder Wärmeeinwirkung zu einem Formkörper verschweißt werden und der ausgehärtete Formkörper durch Schneiden aufgetrennt wird,
**dadurch gekennzeichnet, dass** Polystyrolpartikel als Ausgangsmaterial verwendet werden, in deren Innern ein erstes athermanes Material mit überwiegend remittierenden, insbesondere reflektierenden Eigenschaften in Bezug auf Infrarotstrahlung eingebaut ist, und zur Beschichtung der Polystyrolpartikel ein zweites athermanes Material verwendet wird, das überwiegend absorbierende Eigenschaften in Bezug auf Infrarotstrahlung besitzt.

5. Verfahren nach Anspruch 6,
**dadurch gekennzeichnet, dass** Kohlenstoff, beispielsweise Ruß oder Graphit, Aluminiumpulver, ein sonstiges Metallpulver, Metalloxide, Nichtmetalloxide, organische Farbstoffe und/oder Farbstoffpigmente als athermanes Material verwendet wird.

6. Verfahren nach Anspruch 4 oder 5,
**dadurch gekennzeichnet, dass** Polystyrolpartikel und/oder ein Beschichtungsmaterial verwendet werden bzw. wird, welche bzw. welches Additive und/oder Hilfsmittel, wie beispielsweise Flammschutzmittel, Nukleierungsmittel, Haftvermittler, insbesondere Bindemittel, UV-Stabilisatoren, Weichmacher, Antioxidantien und/oder Säurefänger enthalten.

7. Verwendung einer Wärmedämmplatte nach einem der Ansprüche 1 bis 3 als Putzträgerplatte in einem Wärmedämmverbundsystem, wobei die Schnittfläche der Wärmedämmplatte, auf welcher sich das außen auf die Polystyrolpartikel aufgebrachte athermane Material als netzartiges Muster abzeichnet, der Aufnahme einer ein- oder mehrlagigen Putzschicht dient.

## Claims

1. A heat insulation board made of a polystyrene particle foam, wherein the polystyrene particle foam contains at least one athermanous material, which has predominantly absorbing or predominantly remitting, in particular reflective properties with respect to infrared radiation, and wherein the polystyrene particle foam contains polystyrene particles, which are in each case doped with at least two different athermanous materials, wherein a first athermanous material is incorporated internally and a second athermanous material is applied externally,
**characterised in that** the athermanous material applied externally to the polystyrene particles is apparent in a visually perceptible manner on at least one sectional area of the heat insulation board as a net-like pattern compared with the sectional areas of the individual polystyrene particles, wherein the net-like pattern appears less bright than the sectional areas of the individual polystyrene particles.

2. The heat insulation board according to one of the preceding claims,
**characterised in that** the polystyrene particle foam contains carbon, for example carbon black and/or graphite, aluminium powder, another metal powder, metal oxides, non-metal oxides, organic dyes and/or dye pigments as athermanous material.

3. The heat insulation board according to one of the preceding claims,
**characterised in that** the polystyrene particle foam in the core material and/or in the coating of the core material contains further additives and/or auxiliary agents, such as flame retardants, nucleating agents, adhesion promoters, in particular binders, UV stabilisers, plasticisers, antioxidants and/or acid scavengers.

4. A method for producing a heat insulation board according to one of the preceding claims, in which polystyrene particles, in the interior of which a first athermanous material is already incorporated, are coated with a second athermanous material and are then pre-foamed, wherein the coating can be performed with a second athermanous material, also after the pre-foaming, in which the pre-foamed polystyrene particles coated with a second athermanous material are also welded under the influence of pressure and/or heat to form a shaped article and the cured shaped article is separated by cutting,
**characterised in that** polystyrene particles in the interior of which a first athermanous material having predominantly remitting, in particular reflective properties with respect to infrared radiation is used as starting material, and a second athermanous material having predominantly absorbing properties with respect to infrared radiation is used for the coating of the polystyrene particles.

5. The method according to claim 6,
**characterised in that** carbon, for example carbon black of graphite, aluminium powder, another metal powder, metal oxides, non-metal oxides, organic dyes and/or dye pigments is used as athermanous material.

6. The method according to claim 4 or 5,
**characterised in that** polystyrene particles and/or a coating material are/is used which contain/contains additives and/or auxiliary agents, such as flame retardants, nucleating agents, adhesion promoters, in particular binders, UV stabilisers, plasticisers, antioxidants and/or acid scavengers.

7. Use of a heat insulation board according to one of claims 1 to 3 as a plaster base board in a heat insulation composite system, wherein the sectional area of the heat insulation board, on which the athermanous material applied externally to the polystyrene particles is apparent as a net-like pattern, is used to receive a monolayer or multilayer plaster covering.

## Revendications

1. Panneau thermo-isolant en une mousse de particules de polystyrène, la mousse de particules de polystyrène contenant au moins une matière athermane qui par rapport à un rayonnement infrarouge détient des propriétés en majeure partie absorbantes ou en majeure partie réémettrices, notamment réfléchissantes et la mousse de particules de polystyrène contenant des particules de polystyrène qui sont dopées chaque fois avec au moins deux matières athermanes différentes, une première matière athermane étant incorporée à l'intérieur et une deuxième matière athermane étant appliquée à l'extérieur,
**caractérisé en ce qu'**au moins sur une tranche du panneau thermo-isolant, la matière athermane appliquée à l'extérieur sur les particules de polymère se démarque de manière visuellement perceptible en tant que motif en treillis par rapport aux tranches des particules de polystyrène individuelles, le motif en treillis apparaissant moins clair que les tranches des particules de polystyrène individuelles.

2. Panneau thermo-isolant selon l'une quelconque des revendications précédentes,
**caractérisé en ce que** la mousse de particules de polystyrène contient en tant que matière athermane du carbone, par exemple du noir de carbone et/ou du graphite, de la poudre d'aluminium, une autre poudre métallique, des oxydes métalliques, des oxydes non métalliques, des colorants organiques et/ou des pigments colorants.

3. Panneau thermo-isolant selon l'une quelconque des revendications précédentes,
**caractérisé en ce que** la mousse de particules de polystyrène dans la matière centrale et/ou dans le revêtement de la matière centrale contient des additifs et/ou des adjuvants supplémentaires, comme par exemple des ignifugeants, des agents de nucléation, des promoteurs d'adhérence, notamment des agents liants, des stabilisateurs d'UV, des plastifiants, des antioxydants et/ou des capteurs d'acide.

4. Procédé de fabrication d'un panneau thermo-isolant selon l'une quelconque des revendications précédentes, lors duquel on revêt d'une deuxième matière athermane des particules de polystyrène à l'intérieur desquelles est déjà incorporée une première matière athermane, puis on les préexpanse, le revêtement avec une deuxième matière athermane pouvant également s'effectuer après la préexpansion, lors duquel on soude par ailleurs les particules de polystyrène préexpansées et revêtues d'une deuxième matière athermane sous effet de pression et/ou sous effet thermique en un corps moulé et on sépare le corps moulé durci en le coupant,
**caractérisé en ce qu'**on utilise en tant que matière de départ des particules de polystyrène à l'intérieur desquelles est incorporée une matière athermane avec des propriétés essentiellement réémettrices, notamment réfléchissantes par rapport à un rayonnement infrarouge et pour le revêtement des particules de polystyrène, on utilise une deuxième matière athermane qui fait preuve en majeure partie de propriétés absorbantes par rapport à un rayonnement infrarouge.

5. Procédé selon la revendication 6,
**caractérisé en ce qu'**on utilise en tant que matière athermane du carbone, par exemple du noir de carbone ou du graphite, de la poudre d'aluminium, une autre poudre métallique, des oxydes métalliques, des oxydes non métalliques, des colorants organiques et/ou des pigments colorants.

6. Procédé selon la revendication 4 ou 5,
**caractérisé en ce qu'**on utilise des particules de polystyrène et/ou une matière de revêtement qui contiennent ou qui contient des additifs et/ou des adjuvants, comme par exemple des ignifugeants, des agents de nucléation, des promoteurs d'adhérence, notamment des agents liants, des stabilisateurs d'UV, des plastifiants, des antioxydants et/ou des capteurs d'acide.

7. Utilisation d'un panneau thermo-isolant selon l'une quelconque des revendications 1 à 3 en tant que panneau support de crépi dans un système composite d'isolation thermique, la tranche du panneau sur laquelle la matière athermane appliquée à l'extérieur sur les particules de polystyrène se démarque en tant que motif en treillis servant à recevoir un crépi monocouche ou multicouches.
